# FASCICULE DE BREVET EUROPEEN

(11) **EP 0 597 941 B1**
(45) Date de publication et mention de la délivrance du brevet: **29.05.1996**
(21) Numéro de dépôt: 92916488.7
(22) Date de dépôt: 20.07.1992
(51) Int. Cl.: A47J 36/16, A47J 37/12

(54) **APPAREIL ELECTRIQUE DE CUISSON ET SON PROCEDE DE FABRICATION**
ELEKTRISCHES KOCHGERÄT UND VERFAHREN ZUR HERSTELLUNG DESSELBEN
ELECTRICAL COOKING APPARATUS AND METHOD FOR PRODUCING SAME

(30) Priorité: 30.07.1991 FR 9109672
(43) Date de publication de la demande: 25.05.1994
(73) Titulaire: MOULINEX S.A., F-93170 Bagnolet (FR)
(72) Inventeur: BOIS, Bernard Marcel, F-14000 Caen (FR)
(74) Mandataire: May, Hans Ulrich, Dr.
(86) Numéro de dépôt international: FR9200706
(87) Numéro de publication internationale: WO9302609

(56) Documents cités:
- EP-A- 0 295 159
- DE-C- 175 869
- FR-A- 532 716
- FR-A- 1 125 020
- US-A- 3 115 981
- US-A- 3 193 126
- US-A- 3 635 147
- MU-290 283

## Description

L'invention se rapporte aux appareils électriques de cuisson, tels que par exemple des friteuses, comprenant un boîtier réalisé en une matière plastique susceptible de se dégrader à une température élevée et qui entoure, en ménageant un certain espace, une cuve métallique chauffée par un moyen de chauffage.

De tels appareils sont connus du brevet EP-295 159.

L'invention concerne plus précisément les appareils de cuisson dans lesquels la cuve repose sur une série de supports en matière résistant à la chaleur qui sont interposés entre le bord supérieur du boîtier et le bord supérieur de la cuve, et qui laissent ainsi entre eux des espaces entre lesdits bords supérieurs de la cuve et du boîtier de manière à permettre une circulation d'air autour de la cuve entre des ouvertures pratiquées dans la partie basse du boîtier et lesdits espaces.

Dans les appareils connus de ce genre par exemple du document espagnol MU-290 283 (Base du préambule de la revendication 1), où l'on maintient une circulation d'air entre la cuve et le boîtier, on doit lors de la fabrication effectuer les opérations d'indexage et de montage des supports sur le boîtier, centrage de la cuve par rapport aux supports, puis emboîtement et généralement fixation de cette dernière dans le boîtier. Ces différentes opérations ne sont pas appropriées à une fabrication automatisée en grande série.

L'invention a notamment pour but de simplifier la construction d'un tel appareil de cuisson.

Selon l'invention, lesdits supports comportent chacun une ou plusieurs têtes qui sont montées solidaires du bord supérieur de la cuve avant montage de la cuve dans le boîtier, et un corps destiné à venir en prise avec le bord supérieur du boîtier et comprenant un organe de fixation avec ledit bord du boîtier.

Ainsi les supports, étant fixés directement sur le bord de la cuve, permettent de simplifier les opérations ultérieures d'emboîtement et fixation de la cuve dans le boîtier, ce qui rend possible une fabrication entièrement automatisée en grande série.

D'autres caractéristiques avantageuses sont définies aux revendications 2 à 10.

Les caractéristiques et avantages de l'invention ressortiront d'ailleurs de la description qui va suivre, à titre d'exemple, en référence aux dessins annexés dans lesquels :

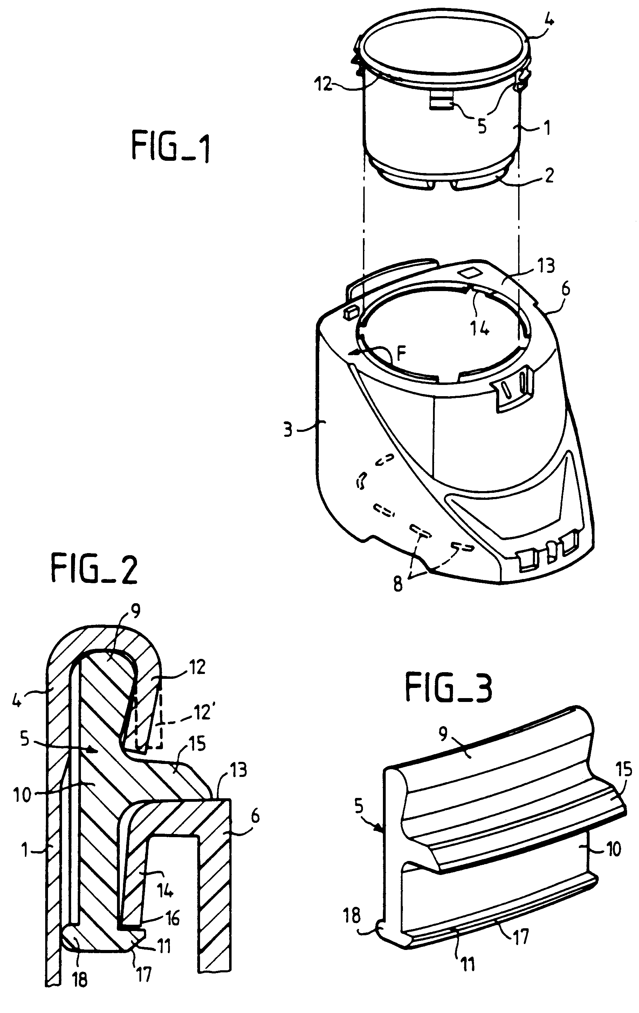

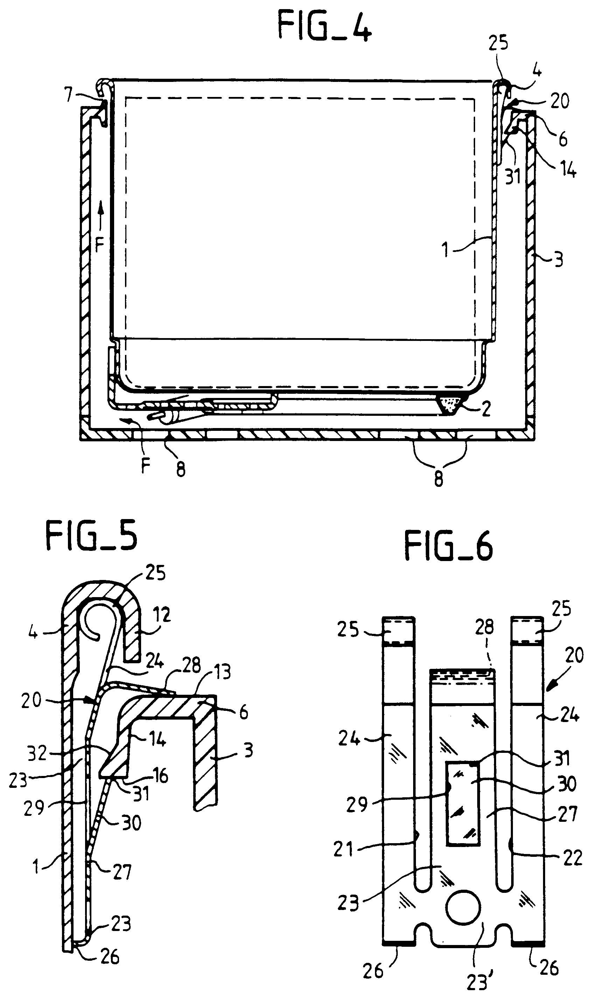

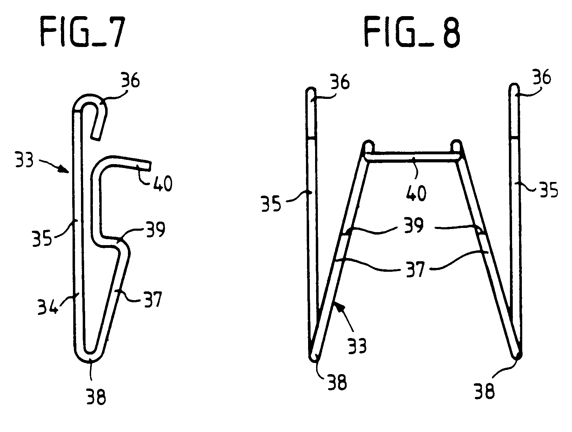

la figure 1 représente en perspective un appareil de cuisson, telle qu'une friteuse, avant assemblage de la cuve dans le boîtier selon un premier mode de réalisation, et auquel est appliquée l'invention ; la figure 2 est une coupe transversale verticale partielle, à grande échelle, illustrant une partie de l'assemblage de la cuve dans le boîtier au moyen d'un support conforme à un premier mode de réalisation ; la figure 3 représente en perspective le support de la figure 2 ; la figure 4 représente schématiquement en coupe verticale une friteuse équipée d'un support selon un second mode de réalisation ; la figure 5 est une vue agrandie d'une partie de la figure 4 illustrant les bords supérieurs de la cuve et du boîtier équipé d'un support ; la figure 6 est une vue à plus petite échelle en élévation du support de la figure 5 ; la figure 7 est une vue de profil d'un support selon un troisième mode de réalisation ; la figure 8 est une vue frontale en élévation du support de la figure 7.

L'appareil électrique de cuisson représenté à la figure 1 est une friteuse qui comprend une cuve métallique 1 dont le fond est chauffé par un moyen de chauffage 2 tel qu'une résistance électrique blindée, un boîtier 3 réalisé en une matière plastique susceptible de se dégrader à une température élevée telle que, par exemple, celle relevée sur le bord supérieur 4 de la cuve 1 qui est de l'ordre de 180° C. De telles matières plastiques sont connues, par exemple, sous le nom d'A.B.S ou Polypropylène. Pour éviter la dégradation du bord supérieur 6 du boîtier 3, ladite cuve 1 repose à l'intérieur du boîtier 3 sur une série de supports 5 qui sont interposés entre ledit bord supérieur 6 et le bord supérieur 4 de la cuve, et qui laissent ainsi entre eux des espaces 7 (voir figure 4) entre lesdits bords supérieurs de manière à permettre une circulation d'air (flèches F figure 1 et 4) autour de la cuve entre lesdits espaces et des ouvertures 8 pratiquées dans la partie basse du boîtier.

Cette circulation d'air permet notamment d'obtenir, non seulement, une bonne aération de l'espace garantissant un fonctionnement plus fidèle du thermostat généralement fixé sur le fond de la cuve et empêchant aussi la stagnation de gouttes d'huile qui se sont immiscées dans cet espace entre les supports et donc l'émanation de brûlé, mais aussi, une meilleure répartition de la température de la cuve chauffée par son fond et donc une meilleure homogénéisation de la température du bain d'huile.

Selon l'invention, lesdits supports 5 comportent chacun une tête 9 qui est montée solidaire du bord supérieur 4 de la cuve 1 et un corps 10 destiné à venir en prise avec le bord supérieur 6 du boîtier et comprenant un organe de fixation 11 avec ledit bord 6.

Comme on le voit mieux sur la figure 2, le bord supérieur 4 de la cuve 1 présente un rebord 12 plié vers le bas et vers l'extérieur et définissant un logement pour les têtes 9 des supports 5, et le bord supérieur 6 du boîtier présente une bordure horizontale 13 dirigée vers l'intérieur et suivie d'un rebord descendant 14 dont l'extrémité inférieure 16 constitue un cran.

Selon un premier mode de réalisation illustré aux figures 1,2 et 3, les supports 5 sont au nombre de quatre et sont constitués chacun en un matériau moulé tel qu'une matière plastique résistant dans le temps à la température du bord supérieur 4 de la cuve, telle que par exemple, du type polyamide ou polyester. Chaque support 5 présente une section de forme générale en "t" dont l'extrémité supérieure de la branche verticale forme la tête 9 et dont l'extrémité inférieure porte l'organe de fixation 11 qui est formé par un crochet dirigé vers la paroi interne du boîtier 3, tandis que la branche horizontale 15 du "t" constitue un moyen d'appui destiné à venir en prise sur la bordure 13 du boîtier.

Dans l'exemple représenté, les têtes 9 des supports 5 sont serties dans le logement du bord de cuve. Cette opération de sertissage est illustrée schématiquement sur la figure 2 sur laquelle est représentée en traits interrompus 12' le rebord 12 avant pliage et en trait plein le rebord plié après sertissage.

En se rapportant à figure 1, on comprend que pour fabriquer une friteuse selon l'invention, on pratique une première opération consistant à monter les supports 5 sur le bord de la cuve 4 en plaçant les têtes 9 dans le logement du bord de la cuve (position en traits interrompus 12'), puis une seconde opération consistant à sertir les têtes 9 dans ce logement (bord de la cuve 12 position en trait plein), et enfin une troisième opération dans laquelle on introduit par le haut l'ensemble ainsi constitué cuve-supports dans l'ouverture du boîtier 3 jusqu'à faire reposer les branches horizontales 15 sur la bordure 13 et obtenir l'enclenchement élastique des crochets 11 sur l'extrémité inférieure 16 du rebord 14. Pour faciliter l'enclenchement automatique, chaque organe de fixation 11 présente un biseau 17 ainsi qu'un talon 18 qui vient s'appliquer contre la paroi de la cuve 1.

Dans cette réalisation, l'enclenchement élastique est obtenu par déformation élastique du rebord 14 du boîtier 3, mais il pourrait, bien entendu, être obtenu, par exemple, par une élasticité au niveau de l'organe de fixation 11, notamment en supprimant le talon 18.

Selon un autre mode de réalisation, les supports 5 peuvent être remplacés par des supports en métal résistant à la température du bord de cuve, par exemple en acier inoxydable et de forme différente. Chaque support en métal présente ainsi la forme d'une plaquette oblongue comportant, en une extrémité, par exemple, au moins un bord roulé formant tête et, dans le corps, une languette formant moyen d'appui ainsi qu'une patte située sous la languette et dont l'extrémité libre forme crochet.

Dans un exemple de cet autre mode de réalisation représenté à titre non limitatif aux figures 4, 5 et 6 et dans lequel on a repris pour les parties communes à la friteuse les mêmes références que celles des figures 1 et 2, la plaquette oblongue constituant un support 20 présente deux entailles longitudinales 21 et 22 ménageant ainsi un corps 23 en trois languettes rattachées à une base commune 23, à savoir deux languettes externes 24 dont les extrémités libres 25 ont respectivement un bord roulé formant tête, et dont les extrémités inférieures forment respectivement un talon 26, ainsi qu'une languette centrale 27 dont l'extrémité libre 28 est pliée et forme le moyen d'appui, et dont la région centrale présente une découpe partielle 29 formant une patte 30 pliée hors du plan de ladite languette 27 et dont l'extrémité libre 31 constitue un organe de fixation en forme de crochet.

Grâce à cette configuration, on obtient un chemin assez long entre le bord de la cuve 1 et le bord du boîtier 3 : têtes 25, languettes 24, partie commune 23, languette 27, moyen d'appui 28, de manière à favoriser la dissipation de chaleur de chaque support inséré dans l'espace d'air.

Comme on le voit mieux sur la figure 5, les têtes 25 de chaque support 20 sont serties dans le logement du bord supérieur 4 de la cuve 1 et les talons 26 prennent appui sur la paroi externe de la cuve 1.

Ainsi, pour réaliser une friteuse selon la figure 4 on procédera de la même façon que celle décrite pour les figures 1 et 2, c'est à dire qu'une fois la cuve 1 équipée de ses supports 20, cet ensemble cuve support est emboîté dans le boîtier 3 jusqu'à faire reposer le moyen d'appui 28 sur la bordure 13 du boîtier et obtenir l'enclenchement élastique des crochets 31 sur l'extrémité inférieure 16 du rebord 14. A cet effet, l'extrémité inférieure 16 du rebord 14 présente un bossage 32 tourné vers la cuve et favorisant la déformation élastique des crochets 31 de manière à obtenir par détente leur enclenchement automatique sur ladite extrémité inférieure 16.

Selon un troisième mode de réalisation illustré aux figures 7 et 8, les supports 5 sont remplacés par des supports 33 réalisés en fil métallique, par exemple, en acier inoxydable et présente en vue frontale (figure 8), un corps 34 de forme générale en "W" dont les deux tronçons externes 35 comportent respectivement deux extrémités libres 36 conformées en boucle de manière à constituer des têtes et dont les tronçons internes 37 reliés respectivement par un coude 38 aux deux tronçons 35 présentent chacun un pli 39 constituant l'organe de fixation en forme de crochet, tandis que la partie médiane supérieure des deux tronçons 37 conformée en une bande s'étendant transversalement aux tronçons 35 et 37 et constituant un moyen d'appui 40.

Ces supports 33 se montent de la même manière que dans la réalisation selon notamment le second mode de réalisation.

Ainsi grâce à l'invention, la fabrication d'une friteuse équipée de tels supports (5-20-33) est particulièrement facile, bien adaptée à une fabrication automatisée en grande série et particulièrement économique. L'invention peut s'appliquer à d'autres appareils de cuisson tels que par exemple : cuiseurs à riz, casseroles électriques, mijoteurs, etc ...

En outre, on fait remarquer que, grâce à la fixation des têtes dans le bord supérieur de la cuve combinée avec les organes de fixation (moyen d'appui et crochet) sur le bord supérieur du boîtier, la cuve 1 est montée libre par rapport au boîtier 3 et n'a pas besoin d'autre organe de fixation pour la maintenir dans ce boîtier, ce qui abaisse le prix de fabrication.

Cette disposition permet également de simplifier les opérations de dépannage si nécessaires.

## Revendications

1. Appareil électrique de cuisson, tel que par exemple une friteuse, comprenant un boîtier (3) réalisé en une matière plastique susceptible de se dégrader à une température élevée et qui entoure, en ménageant un certain espace, une cuve métallique (1) chauffée par un moyen de chauffage (2), ladite cuve reposant sur une série de supports (5-20-33) en matière résistant à la chaleur qui sont interposés entre le bord supérieur (6) du boîtier (3) et le bord supérieur (4) de la cuve (1), et qui laissent ainsi entre eux des espaces (7) entre lesdits bords supérieurs de la cuve et du boîtier de manière à permettre une circulation d'air autour de la cuve entre des ouvertures (8) pratiquées dans la partie basse du boîtier et lesdits espaces,
**caractérisé en ce que** lesdits supports (5-20-33) comportent chacun une ou plusieurs têtes (9-25-36) qui sont montées solidaires du bord supérieur (4) de la cuve (1) avant montage de la cuve dans le boîtier, et un corps (10-23-34) destiné à venir en prise avec le bord supérieur (6) du boîtier (3) et comprenant un organe de fixation (11-31-39) avec ledit bord du boîtier.

2. Appareil électrique de cuisson selon la revendication 1,
**caractérisé en ce que** le bord supérieur (4) de la cuve (1) présente un rebord (12) plié vers l'extérieur et vers le bas et définissant un logement dans lequel les têtes (9-25-36) des supports (5-20-33) sont serties.

3. Appareil électrique de cuisson selon la revendication 1 ou 2,
**caractérisé en ce que** chaque organe de fixation (11-31-39) est constitué par un crochet destiné à venir en prise avec un cran (16) correspondant solidaire du bord supérieur (6) du boîtier (3).

4. Appareil électrique de cuisson selon la revendication 3,
**caractérisé en ce que** le bord supérieur (6) du boîtier (3) présente une bordure horizontale (13) dirigée vers l'intérieur et suivie d'un rebord descendant (14) dont l'extrémité (16) constitue ainsi le cran.

5. Appareil électrique de cuisson selon la revendication 3 ou 4,
**caractérisé en ce que** chaque support (5) est constitué en un matériau moulé résistant à la température du bord supérieur (4) de la cuve (1) et présente une section de forme générale en "t" dont l'extrémité supérieure de la branche verticale forme la tête (9), et dont l'extrémité inférieure porte l'organe de fixation (11) en forme de crochet dirigé vers la paroi interne du boîtier (3), tandis que la branche horizontale (15) dudit "t" constitue un moyen d'appui.

6. Appareil électrique de cuisson selon la revendication 5,
**caractérisé en ce que** chaque support (5) est réalisé en une matière plastique telle qu'un polyamide ou polyester.

7. Appareil électrique de cuisson selon la revendication 3 ou 4,
**caractérisé en ce que** chaque support (20) est réalisé en un métal résistant à la température du bord (4) de la cuve (1) et présente la forme d'une plaquette oblongue comportant, en une extrémité (25), un bord roulé formant tête, et dans le corps (23), une languette (27) formant moyen d'appui (28), ainsi qu'une patte (30) située sous la languette et dont l'extrémité libre (31) forme crochet.

8. Appareil électrique de cuisson selon la revendication 7,
**caractérisé en ce que** la plaquette oblongue est réalisée en acier inoxydable et présente dans le corps (23) deux entailles longitudinales (21 et 22) ménageant trois languettes, deux languettes externes (24) dont les extrémités libres (25) ont un bord roulé formant tête, et une languette centrale (27) dont l'extrémité libre (28) est pliée et forme le moyen d'appui, et dont la région centrale présente une découpe partielle (29) formant une patte (30) pliée hors du plan de la languette et dont l'extrémité libre (31) forme crochet.

9. Appareil électrique de cuisson selon la revendication 3 ou 4,
**Caractérisé en ce que**, chaque support (33) est réalisé en fil métallique tel qu'un fil en acier inoxydable présentant en vue frontale un corps (34) de forme générale en "W" dont les deux tronçons externes (35) comportent respectivement deux extrémités libres (36) conformées en boucle pour former des têtes, et dont les tronçons internes (37) reliés respectivement par un coude (38) aux deux tronçons (35) présentent chacun un pli (39) formant crochet, tandis que la partie médiane supérieure des deux tronçons (37) est conformée en une boucle (40) s'étendant transversalement aux tronçons (35 et 37) pour constituer un moyen d'appui.

10. Procédé de montage d'une cuve dans un boîtier d'appareil électrique de cuisson selon les revendications 3 à 9,
**caractérisé en ce qu'**on serti les têtes (9-25-36) des supports (5-20-33) dans le logement du bord supérieur (4) de la cuve (1) ; on emboîte la cuve (1) ainsi équipée des têtes dans le boitier (3) jusqu'à appui des corps (10-23-34) sur le bord supérieur (6) du boîtier (3) et encliquetage élastique des crochets (11-31-39) sur le cran (16) solidaire du bord supérieur (6).

## Claims

1. Electrical cooking appliance, such as for example a deep-fryer, comprising a casing (3) produced from a plastic liable to degrade at a high temperature and which surrounds, leaving a certain amount of space, a metal pan (1) heated by a heating means (2), the said pan resting on a series of supports (5-20-33) made from a heat-resistant material and which are interposed between the top edge (6) of the casing (3) and the top edge (4) of the pan (1), and which thus leave between them spaces (7) between the said top edges of the pan and casing so as to allow the circulation of air around the pan between openings (8) made in the lower portion of the casing and the said spaces, characterised in that the said supports (5-20-33) each have one or more heads (9-25-36) which are mounted fixed to the top edge (4) of the pan (1) before mounting the pan in the casing, and a body (10-23-34) intended to come into engagement with the top edge (6) of the casing (3) and comprising a member (11-31-39) for fixing to the said edge of the casing.

2. Electrical cooking appliance according to Claim 1, characterised in that the top edge (4) of the pan (1) has a rim (12) bent outwards and downwards and defining a housing in which the heads (9-25-36) of the supports (5-20-33) are crimped.

3. Electrical cooking appliance according to Claim 1 or 2, characterised in that each fixing member (11-31-39) is formed by a hook intended to come into engagement with a corresponding catch (16) fixed to the top edge (6) of the casing (3).

4. Electrical cooking appliance according to Claim 3, characterised in that the top edge (6) of the casing (3) has a horizontal edging (13) directed towards the inside and followed by a descending rim (14), the end (16) of which thus forms the catch.

5. Electrical cooking appliance according to Claim 3 or 4, characterised in that each support (5) is formed from a moulded material which can withstand the temperature of the top edge (4) of the pan (1) and has a cross-section in the general shape of a "t", the top end of the vertical leg of which forms the head (9) and the bottom end of which carries the fixing member (11) in the shape of a hook directed towards the internal wall of the casing (3), whilst the horizontal leg (15) of the said "t" constitutes a bearing means.

6. Electrical cooking appliance according to Claim 5, characterised in that each support (5) is produced from a plastic such as a polyamide or polyester.

7. Electrical cooking appliance according to Claim 3 or 4, characterized in that each support (2) is produced from a metal which can withstand the temperature of the edge (4) of the pan (1) and has the shape of an oblong plate having, at one end (25), a rolled edge forming a head, and in the body (23) a tongue (27) forming a bearing means (28), as well as a lug (30) which is situated under the tongue and the free end (31) of which forms a hook.

8. Electrical cooking apparatus according to Claim 7, characterized in that the oblong plate is produced from stainless steel and has in the body (23) two longitudinal slots (21 and 22) forming three tongues, two outer tongues (24), the free ends (25) of which have a rolled edge forming a head, and a central tongue (27), the free end (28) of which is bent and forms the bearing means and the central region of which has a partial cut-out (29) forming a lug (30) which is bent out of the plane of the tongue and the free end (31) of which forms a hook.

9. Electrical cooking appliance according to Claim 3 or 4, characterised in that each support (33) is produced from metal wire such as a stainless steel wire having, in front view, a body (34) of general "W" shape, the two outer sections (35) of which have respectively two free ends (36) shaped into a loop in order to form heads, and the inner sections (37) of which, connected respectively by an elbow (38) to the two sections (35), each have a bend (39) forming a hook, whilst the top median part of the two sections (37) is formed into a loop (40) extending transversely to the sections (35 and 37) in order to constitute a bearing means.

10. Method for mounting a pan in a casing of an electrical cooking appliance according to Claims 3 to 9, characterised in that the heads (9-25-36) of the supports (5-20-33) are crimped in the housing of the top edge (4) of the pan (1); the pan (1) thus equipped with the heads is fitted into the casing (3) until the bodies (10-23-34) come to bear on the top edge (6) of the casing (3) and the hooks (11-31-39) elastically snap onto the catch (16) fixed to the top edge (6).

## Patentansprüche

1. Elektrisches Kochgerät, wie z.B. eine Friteuse, mit einem Gehäuse (3), das aus einem Kunststoffmaterial das erst bei hohen Temperaturen beschädigt wird, hergestellt ist, und das einen durch eine Heizvorrichtung (2) heizbaren Metalltopf (1) so umgibt, daß zwischen beiden ein gewisser Raum freibleibt, wobei der Topf auf mehreren Stützen (5-20-33) aus hitzebeständigem Material aufliegt, die zwischen dem oberen Rand (6) des Gehäuses (3) und dem oberen Rand (4) des Topfes (1) angebracht sind und die so zwischen sich Öffnungen (7) zwischen dem oberen Rand des Topfes und dem oberen Rand des Gehäuses lassen, so daß Luft zwischen Öffnungen (8), die im unteren Teil des Gehäuses ausgebildet sind, und den Öffnungen (7) rings um den Topf zirkulieren kann, **dadurch gekennzeichnet, daß** die Stützen (5-20-33) jede einen oder mehrere Köpfe (9-25-36), die vor dem Einbau des Topfes in das Gehäuse am oberen Rand (4) des Topfes (1) fest gehalten sind, und einen Körper (10-23-34) aufweisen, der mit dem oberen Rand (6) des Gehäuses (3) in Eingriff kommen soll und ein Befestigungselement (11-31-39) zur Befestigung am Rand des Gehäuses aufweisen.

2. Elektrisches Kochgerät nach Anspruch 1, **dadurch gekennzeichnet, daß** der oberen Rand (4) des Topfes (1) eine Krempe (12) aufweist, die nach außen und nach unten gebogen ist und eine Aufnahme bildet, in die die Köpfe (9-25-36) der Stützen (5-20-33) eingesetzt sind.

3. Elektrisches Kochgerät nach Anspruch 1 oder 2, **dadurch gekennzeichnet, daß** jedes Befestigungselement (11-31-39) durch einen Haken gebildet ist, welcher in eine entsprechende mit dem oberen Rand (6) des Gehäuses (3) einstückige Raste (16) eingreift.

4. Elektrisches Kochgerät nach Anspruch 3, **dadurch gekennzeichnet, daß** der obere Rand (6) des Gehäuses (3) eine nach innen gerichtete horizontale Randleiste (13) aufweist, an welche ein nach unten gebogener Umschlag (14) anschließt, dessen Ende (16) die Raste bildet.

5. Elektrisches Kochgerät nach Anspruch 3 oder 4, **dadurch gekennzeichnet, daß** jede Stütze (5) aus geformtem Material ausgebildet ist, welches bei der Temperatur des oberen Randes (4) des Topfes (1) beständig ist, und einen Schnitt der allgemeinen Form eines "t" aufweist, wobei das obere Ende des vertikalen Astes des "t" den Kopf (9) und das untere Ende das Befestigungselement (11) in Form eines zur inneren Wand des Gehäuses (3) gerichteten Hakens trägt, während der horizontale Ast (15) des "t" ein Stützelement darstellt.

6. Elektrisches Kochgerät nach Anspruch 5, **dadurch gekennzeichnet, daß** jede Stütze (5) aus einem Kunststoffmaterial, wie einem Polyamid oder Polyester, besteht.

7. Elektrisches Kochgerät nach Anspruch 3 oder 4, **dadurch gekennzeichnet, daß** jede Stütze (20) aus einem Metall besteht, welches bei der Temperatur des Randes (4) des Topfes (1) beständig ist, und die Form eines länglichen Plättchens aufweist, das am einen Ende (25) einen den Kopf bildenden umgefalzten Rand und am Körper (23) eine ein Stützelement (28) bildende Zunge (27) sowie eine Klammer (30) aufweist, die sich unter der Zunge befindet und deren freies Ende (31) einen Haken bildet.

8. Elektrisches Kochgerät nach Anspruch 7, **dadurch gekennzeichnet, daß** das längliche Plättchen aus Edelstahl besteht und im Körper (23) zwei Längsschlitze (21 und 22) aufweist, wodurch drei Zungen entstehen, zwei äußere Zungen (24), deren freie Enden (25) einen den Kopf bildenden umgefalzten Rand aufweisen, und eine mittlere Zunge (27), deren freies Ende (28) abgespreizt ist und das Stützelement bildet, und deren Mittelbereich einen Teilausschnitt (29) aufweist, der eine Klammer (30) bildet, die aus der Ebene der Zunge heraus gebogen ist und deren freies Ende (31) einen Haken bildet.

9. Elektrisches Kochgerät nach Anspruch 3 oder 4, **dadurch gekennzeichnet, daß** jede Stütze (33) aus einem Metalldraht, wie z.B. ein Draht aus Edelstahl, ausgebildet ist und in Frontansicht einen Körper (34) der allgemeinen Form eines "W" bildet, dessen zwei äußere Abschnitte (35) jeweils ein freies Ende (36) aufweisen, das zu einer Öse geformt ist und so einen Kopf bildet, und dessen innere Abschnitte (37), die jeweils durch einen Bogen (38) mit den zwei Abschnitten (35) verbunden sind, jedes einen einen Haken bildenden Knick (39) aufweisen, während der mittlere obere Bereich der zwei Abschnitte (37) zu einem Bügel (40) geformt ist, der transversal zu den Abschnitten (35 und 37) verläuft und ein Stützelement bildet.

10. Verfahren zum Einbau eines Topfes in ein Gehäuse eines elektrischen Kochgeräts nach den Ansprüchen 3 bis 9, **dadurch gekennzeichnet, daß** die Köpfe (9-25-36) der Stützen (5-20-33) in die Aufnahme des oberen Randes (4) des Topfes (1) eingeklemmt werden; der so mit Köpfen ausgestattete Topf (1) wird in das Gehäuse (3) eingesetzt, bis die Körper (10-23-34) am oberen Rand (6) des Gehäuses (3) anstoßen und die Haken (11-31-39) elastisch an der mit dem oberen Rand (6) einstückigen Raste (16) einrasten.
